Europäisches Patentamt

European Patent Office

Office européen des brevets

(19)

(11) Publication number : **0 493 105 A2**

# (12) EUROPEAN PATENT APPLICATION

(21) Application number : 91312004.4

(51) Int. Cl.⁵ : **G06F 15/70**

(22) Date of filing : 23.12.91

(30) Priority : 27.12.90 US 634675

(43) Date of publication of application :
01.07.92 Bulletin 92/27

(84) Designated Contracting States :
DE FR GB

(71) Applicant : **International Business Machines Corporation**
**Old Orchard Road**
**Armonk, N.Y. 10504 (US)**

(72) Inventor : **Beers, Gregory Edward**
**11700 Knollpark Drive**
**Austin, TX 78758 (US)**

Inventor : **Flickner, Myron Dale**
**678 Briar Ranch Lane**
**San Jose, California 95120 (US)**
Inventor : **Kelly-Mahaffey, William Larry**
**2805 Silverway**
**Austin, Texas 79757 (US)**
Inventor : **Polk, Darryl Ray**
**9102 Balcones Club Drive**
**Austin, Texas 78750 (US)**
Inventor : **Stafford, James Michael**
**1060 Red Bud Lane**
**Round Rock, Texas 78664 (US)**
Inventor : **Wattenbarger, Henry Edison**
**No.18 Rowe Loop**
**Pflugerville, Texas 78660 (US)**

(74) Representative : **Mitchell, Allan Edmund et al**
**IBM United Kingdom Limited Intellectual Property Department Hursley Park**
**Winchester Hampshire SO21 2JN (GB)**

(54) **Data processing method and apparatus.**

(57) A component 4 located at the end of a robotic end effector 2 is illuminated by two light sources 6. Two CCD array sensor cameras 10 and 12 for detecting gray level images receive light from the component 4 through a beam splitter 8. The component 4 has a multiplicity of leads along its sides. A vision processor 20 includes a frame grabber 22 converting analog video signals from cameras 10 to 12 to digital and storing them in memory 24. The vision processor 20 then determines presence, position and orientation of component leads prior to placement. Image processing decreases computational complexity by representing two dimensional image areas of interest by one dimensional summation profiles.

FIG. 1

This invention relates to data processing methods and apparatus.

A Particular application of the invention is to the visual inspection of electronic component leads as a step in a total placement system. Such an inspection relates to determining presence/absence, position and orientation of fine pitch leads on a surface mount component, such as a TAB device, located on a robotic end effector.

For high speed throughput in a automated component placement system, great accuracy is required. First, the presence or absence, position and orientation of component leads must be determined. It is conventional to use computer vision techniques to aid in this determination.

In IBM Technical Disclosure Bulletin Volume 30, Number 1, 1987, pp. 228, discloses a technique for inspecting a component and its leads prior to placement with a high degree of accuracy. However, it differs from the present invention in that it does not provide for the accuracy required for fine pitch components.

The principle differences resulting in less accuracy are that this disclosure uses only one camera and determines lead position on the basis of binary pixels rather than the additional information contained in gray level pixels.

Similarly, IBM Technical Disclosure Bulletin Volume 31, Number 10, March 1989, pp. 222, discloses the use of computer vision processing, without detail, for inspecting component lead presence, condition and orientation as a step in a total placement system.

IBM Technical Disclosure Bulletin, Volume 31, Number 9, February 1989, p. 186, discloses the use of a CCD camera and a vision and system to determine X, Y and theta offsets. Conventional CCD video cameras used in machine vision systems typically have resolution of 492 (vertical) by 512 (horizontal) pixels. Working with such a large pixel array requires time and computational resources in large amounts. It is desirable to optimise time and resource usage without sacrificing accuracy in vision processors.

The present invention improves on prior art techniques for detecting presence or absence, position and orientation of fine pitch component leads by reducing the number and complexity of vision processing operations.

The positions of leads within the image are determined by finding peaks within summation profiles taken from regions of interest i.e. where leads are expected. A summation profile is a digital integral taken along rows or columns of pixels. The sum of a brightly lit row or column of pixels which are projected by leads is higher than the projection of the relatively dark background between leads. The summation profile technique reduces the number and order of calculations required, so high speed throughput is obtained as a result of performing calculations on N x 1 summation profiles, rather than on N x N pixel arrays.

The inventive technique uses the coordinates of four regions of interest in the image within which leads along the top, left, bottom, and right of a rectangular component are expected to fall. Iteratively, each of the regions of interest is treated to find the position of leads on each side of the component. After leads are found on each side, the average of the positions is taken. This average, called the average centroid, represents the centre position of that side of the component being inspected to sub-pixel accuracy.

The four average centroids are used to determine the centre and orientation of the component. If no errors which cause processing of a component image to stop are encountered, the orientation and centre of the component are used in the subsequent control of automated placement apparatus for assembling of the component on a printed circuit substrate.

In a preferred embodiment, two cameras are used to produce two overlapping gray level images of a component. Two images are used to enable higher resolution. Selected portions where the two images leads are expected are mapped to a common coordinate system to facilitate subsequent determination of orientation of each selected image portion and the amount of overlap between a given selected portion and all other selected portions. Once regions corresponding to sides of the component being inspected are determined, positions of the leads are found as just indicated. In an alternative embodiment a single camera is used for initial image capture.

The scope of the invention is defined by the appended claims; and how it can be carried into effect is hereinafter particularly described with reference to the accompanying drawings in which:

Fig. 1 is the schematic illustration of the system in which the present invention is used;

Fig. 2 is a schematic illustration of a rectangular, fine-pitch, electronic component;

Figs. 3A and 3B illustrate the images seen by cameras in Fig. 1;

Fig. 4 illustrates combining the images of Fig. 3;

Fig. 5 graphically illustrates component lead projection;

Fig. 6 illustrates the determination of component centre and orientation;

Fig. 7 illustrates a modification to the system of Fig. 1; and

Fig. 8 is a flow chart illustrating the logic executed in the vision processor.

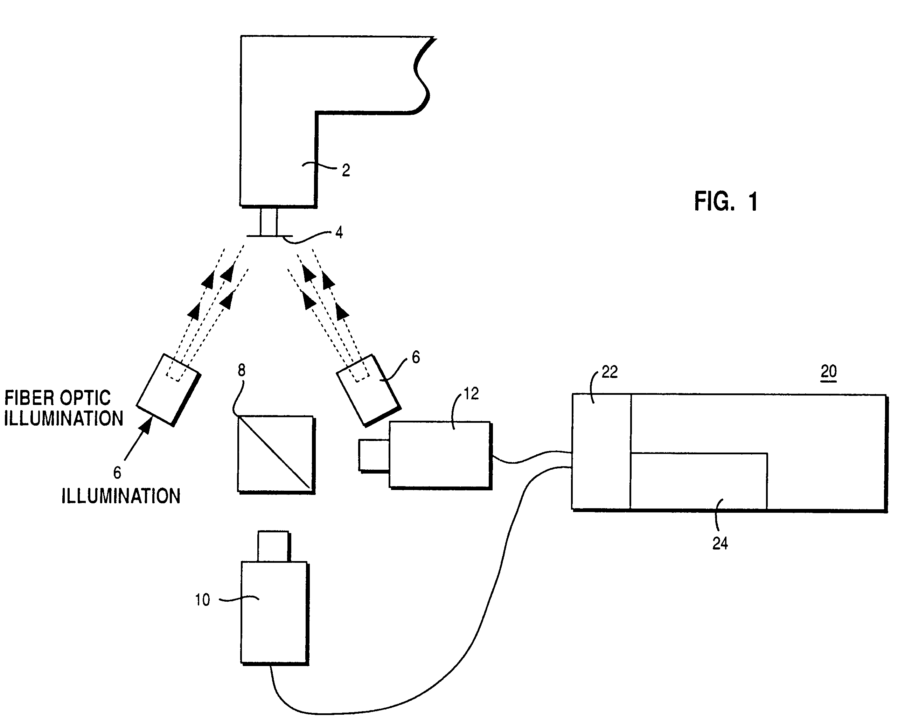

In a system in which the present invention is used, a robotic end effector 2 (Fig. 1) carries a component 4 and positions it at an inspection location. The component 4 is illuminated by light sources 6. Beam splitter 8 is interposed between component 4 and cameeras 10 and 12. Cameras 10 and 12 may be CCD array sensors for detecting gray level images. Cameras 10 and 12 are in a fixed location with respect to the presentation position of the component at the inspection location. Image data from cameras 10 and 12 is fed into vision processor 20 which includes frame grabber 22 for converting analog video signals to digital and storing them in memory 24.

Vision processor 20 also includes image processing logic for first retrieving and then summing subarray data.

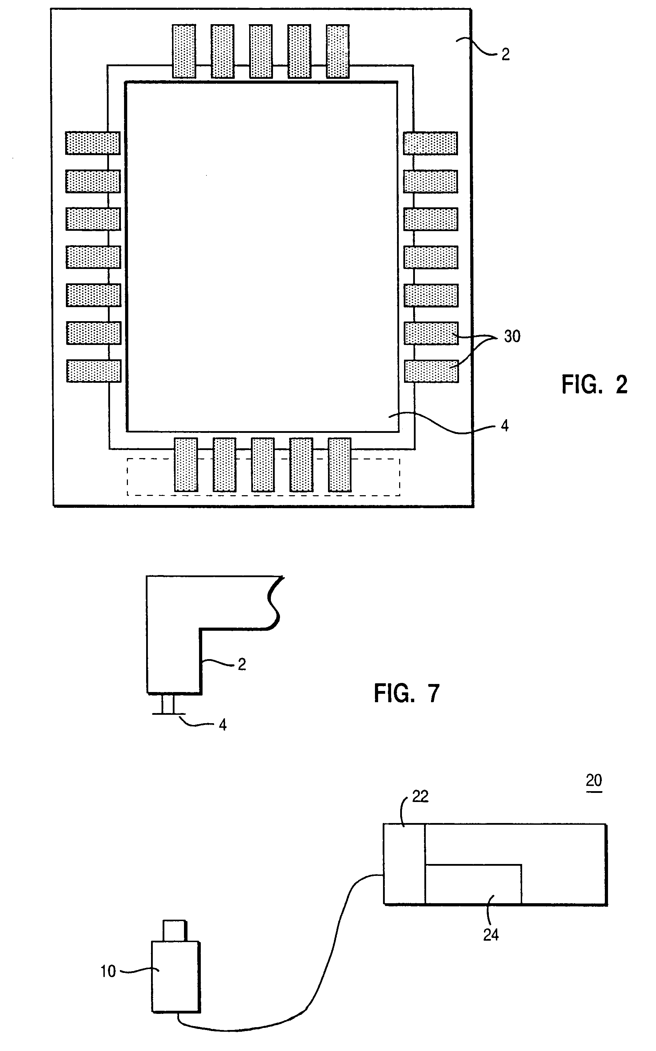

The component 4 (Fig. 2) carried by the robotic end effector 2, has leads 30.

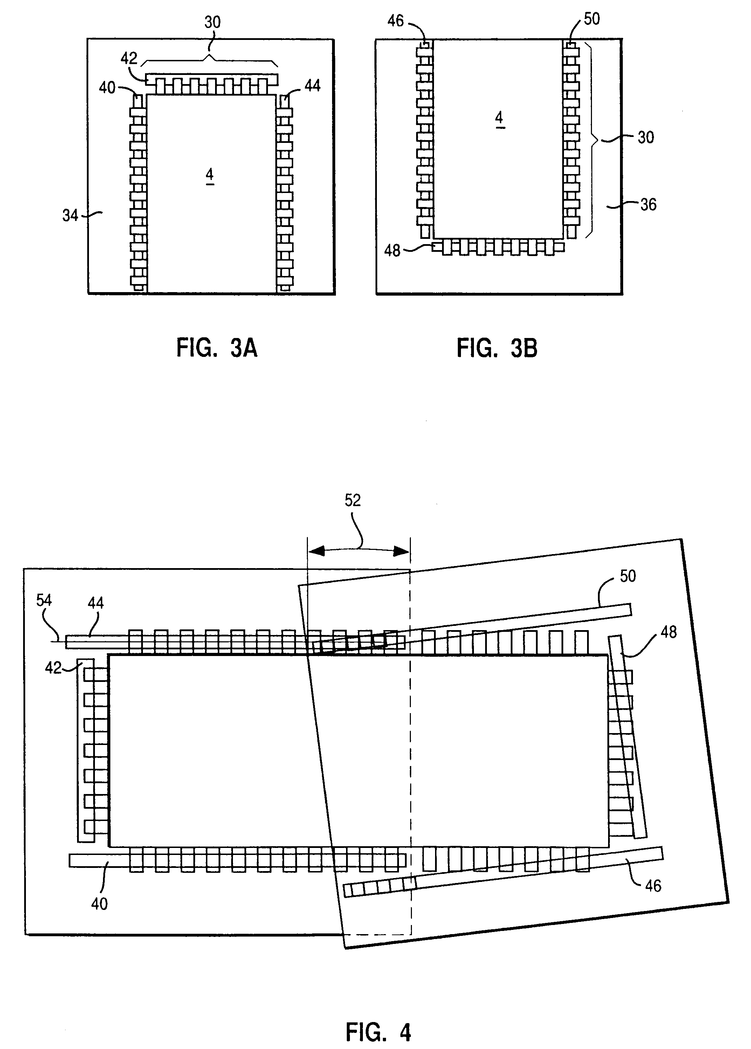

An image 34 (Fig. 3A) is the view of component 4 seen by camera 10 (Fig. 1) and includes a portion of the component 4 and its leads 30. Image 34 corresponds to the two dimensional array 480 x 512 of pixels detected by camera 10. Similarly image 36 (Fig. 3B) corresponds to the 480 x 512 array of pixels detected by camera 12 and includes a portion of component 4 and its leads 30. A window is a rectangular portion predefined by diagonal coordinate pairs of an image within which the search for component leads is conducted. Windows are set, predefined for each component type during systems start up. Windows 40, 42 and 44 in image 34 correspond to predetermined subarrays of pixels, where leads 30 are expected to be. Similarly windows 46, 48 and 50 correspond to subarrays of pixels in image 36, where leads are expected to appear.

Advantages in throughput times arise primarily because less than the entire digitised camera image needs to be examined in order to complete inspection of component 4.

All windows in the two images 34 and 36 are mapped to a common coordinate system. By way of example an Euler transform may be suitable. Subsequently, all computation on window coordinates is made on mapped windows. The orientation of each mapped window is determined and the amount of overlap between each mapped window and every other mapped window is calculated.

In order for two windows to overlap, they must be oriented in the same direction, for example windows 44 and 50 (Fig. 4). Within a set of overlapping windows, each window is paired with the window with which it has the best measure of overlap. The measure of overlap is the distance 52 that windows have in common along an axis of orientation 54.

Mapped windows which are longer in the X dimension than in the Y dimension are designated as being oriented from left to right and are found on the top and bottom of a rectangular component. Mapped windows which are longer in the Y dimension than in the X dimension are designated as being oriented from top to bottom and are found on the left and right sides of a component.

Groups of windows are classified as falling into the classes top, left, bottom, or right of a component. A group of windows comprises one non-overlapping mapped window, such as window 42 or 48, or a pair of two overlapping mapped windows, such as windows 44 and 50. Groups within each class are then ordered canonically, in the preferred embodiment counter clockwise starting at top right. This ordering in the windows in each group is used in subsequent calculations for determining the centroids of each side and amount of overlap of windows. Other ordering may be used.

Once a position of the lead centroids and a common coordinate system are determined and overlapping leads are compensated for, lead centroid positions are used to compute the centroid of the component and position and orientation of the component.

In the described embodiment, component location is known to within 5 percent of its linear dimension. This knowledge simplifies vision system computations as only very small windows, regions of interest, in the image of a component need be examined.

TAB components are to be visually inspected after they have been excised from a tape and their leads formed. A robotic end-effector picks up the excised and formed component and after the visual inspection is completed and coordinate corrections made, places the component on the printed circuit substrate to which it is subsequently bonded.

Coordinates of windows are fixed within the camera frame of reference.

In the technique for finding lead centroids in unmapped windows, a summation profile for each set of leads 30 in each unmapped window, such as 42 is found as follows (Fig. 3).

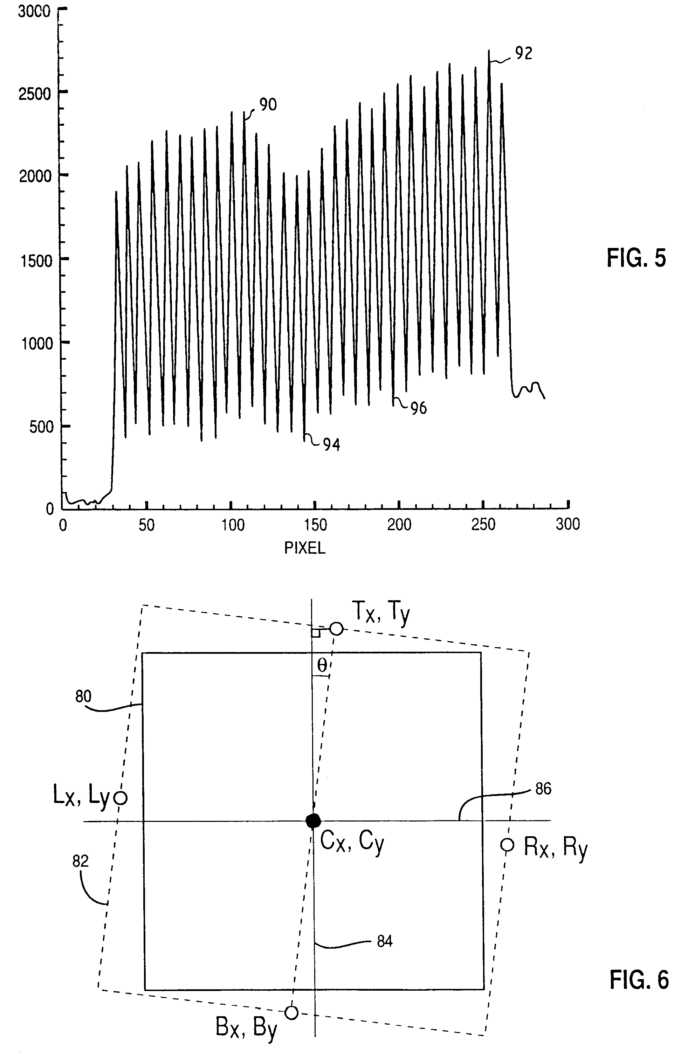

In the graphic representation (Fig. 5) of a summation profile for a given narrowly constrained region of interest in an image, e.g. window 42 (Fig. 3), the horizontal axis represents the particular position along the component windows long axis, and the vertical axis represents the digital integration or summation of the pixels oriented along the window short axis in line with the leads.

Pixel values are summed for a given row or column. For summation profiles to reflect accurately the position of leads, the axis of each lead must be approximately parallel to the line of summation. Thus summation profiles are sums of gray level pixel values in rows or columns of two dimensional arrays as a function of the expected orientation of leads on a side of the component. Because the width of summation windows is small, the effects of non-orthogonality of image axis and lead axis is diminished. If orientation of a component does not vary by more than 2.5 degrees, it is safe to assume that any error introduced by non orthogonality is insignificant.

The material of end effector 2 (Fig 1) is such that the leads appear as brightly reflected features against a darker background. This aspect of the illustrative system further reduces required computation time as the background is not specular.

The centres of the leads correspond to peaks 90 and 92 in the summation profile (Fig. 5. First differences, i.e. derivatives, of the sums are found. Peaks in the summation profile occur at a first difference transition from plus to minus. Valleys 94 and 96 occur at transitions from - to +. Some of the peaks correspond to lead centres. The centres of the leads cannot be found by looking for the edges of leads because there is insufficient data to distinguish clearly the edges of the individual leads. The leads are so close together that the summation profiles form Gaussian distributions with peaks at the centres of the leads.

Light gradients are corrected by subtracting smmuation valleys from adjoining peaks. Corrected peak values obtained in this manner are less variable because surfaces corresponding to peaks receive approximately the same amount of incident light from illumination sources 6, Fig. 1 as the surfaces corresponding to adjoining valleys.

The lead positions in the two images from cameras 10 and 12 in Figs. 3A and 3B are then mapped to a common coordinate space using the same Euler transform as above described with respect to windows 40, 42, 44, 46, 48, and 50. Mapping only lead centroids rather than the entire image avoids a huge computational expense.

It is necessary to determine overlap between leads and overlapping windows for each group. Two leads are deemed overlapping if their proximity is less than that which can be attributed to errors in calibration and initial estimates of position in image space. If the number of leads found after correction for overlap is not that expected and no leads are determined to be missing, then a check of calibration accuracy is required. Further, the absence of overlapping leads within overlapping windows indicates a need for a calibration accuracy check.

The exclusion of false leads is enhanced as noise peaks of the corrected peak values are excluded by ignoring all peaks below an empirically determined minimum. Thus, false leads are prevented from appearing where a missing lead might be. From the peaks remaining in a region of interest after noise suppression, a group is selected for which all of the peaks are 0.75 to 1.25 pitch distance from their nearest neighbouring peaks. For any given component placement operation, nominal pitch and lead size are known. In addition, the number of peaks in the group must be at least the number of expected leads. Hence, missing or bent lead detection is indicated by absence of an acceptable group of peaks. False leads at either end of a selected group are eliminated by discarding corrected peaks until the two peaks at either end are within a normal range of corrected summation values of the other peaks in the groups.

This method is successful as the region of interest, i.e. a window is only 5 percent larger than the length of a group of leads. Thus, there is little room in which false peaks can appear. Even fewer false peaks occur in a selected group because "good", true, peaks are required to occur at the distance of one pitch from their nearest neighbouring corrected peak. The ratio of true leads to false leads in a selected group is therefore high. A group of true leads produces corrected summation peaks varying little from each other in their values, while the corrected summation peak for a false lead differs noticeably from those of true peaks.

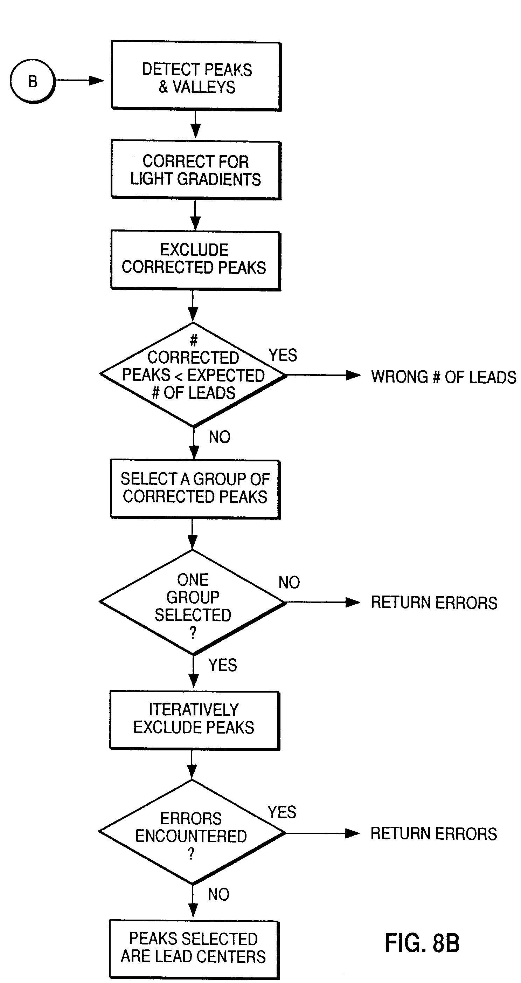

As the ratio of true peaks to false leads is high, measures of the first and second moments of a selected group of leads will be most reflective of true leads and so false leads may be excluded using these measures. The logic followed is shown in the flow chart of Fig. 8B which summarises the process just described.

The determination of component centre to sub pixel accuracy may be understood by reference to Fig. 6, which schematically shows, against a reference outline 80, an outline 82 representing image frame of the component 4. The average lead centroids are indicated with coordinates $(Tx, Ty)$, $(Rx, Ry)$, $(Bx, By)$, and $(Lx, Ly)$. The coordinates of the centre $(Cx, Cy)$ of component 4 are found by averaging the centroids of the sides.

Cx = the absolute value of (Tx - Bx)/2

Cy = the absolute value of (Ly - Ry)/2

The orientation of component 4 is the angle theta between outline axes 84 and 86 and the image axes of the image 82 of component 4. The angle theta is calculated in accordance with the following:

Theta = arcsin ((Cx-Tx)/(Ty-Cy)) = ((Ly-Cy)/(Lx-Cx))

There follows below a Pseudo code description of the logic comprising the inspection technique of the present invention.

Block Subroutine Hierarchy:
Block 0:  Examine a component
    Block 1:  Find centres of leads
        Block 1A: Correct for light gradients
        Block 1B: Select a group of corrected
                  peaks.
            Block 1B1: Find all the groups
                       whose peaks are pitch
                       distance apart.
            Block 1B2: Choose one of the
                       groups
        Block 1C: Iteratively exclude peaks
                  from either end of the group
            Block 1C1: Remove peaks
    Block 2:  Find average centroid
    Block 3:  Find position and orientation

Block 0:  Examine a Component:
    Iteratively examine each region of interest on each of the four sides of a component:
        Block 1:  Find centres of leads in the
                  region of interest.
        if no errors encountered in Block 1:

```
then
        Block 2:  Find average centroid of
                  leads in the region of
                  interest.
if no errors have been found in any of the four sides of a component
then
        Block 3:  Find position and orientation of
                  the component
if no errors found
then
        Use the position and orientation of the component to place it.
else
        Reject the component.


Block 1:  Find Centres of Leads:
        If the region of interest is oriented vertically:
        then
                form the summation profile by summing rows of pixels from the
                top of the region of interest to the bottom.
        else the region of interest is oriented horizontally:
                form the summation profile by summing columns of pixels from
                the left side of the region of interest to the right side.



Find first differences of the sums in the summation profile.


Using the first differences, find the peaks and valleys in the
summation profile:


        Some of the peaks correspond to the centres
        of the leads.
```

Block 1A: Correct for light gradients by subtracting adjacent
valleys from peaks, the result of which are corrected
peaks.

Exclude corrected peaks whose average per pixel value is less
than an empirically derived
minimum.

if number of corrected peaks left in the region of interest is
less than expected number of
leads

then
return Error:  WRONG NUMBER OF LEADS
else the number of correct peaks is at least the number of
expected leads:
Block 1B: Select a group of corrected peaks for which:
*    all of the peaks are 0.75 to 1.25 pitch from their
nearest neighbouring
peaks.
*    The number of peaks in the group is at least the
number of expected peaks.
if errors encountered in Block 1B:
then
return errors
else a group of corrected peaks has been selected by Block
1B:
Block 1C:
Iteratively exclude peaks from either end of the
group until:
The two end peaks are within a normal range
of values of the other peaks in the group
or
The number of peaks remaining 9n the group
is = the expected number of leads.
return any errors encountered in Block 1C.
if no errors encountered:

then

the remaining peaks in the selected group correspond to the centres of leads in this region of interest.

Block 1A:  Correct for light Gradients:

There is only one valley nest to the last peak:

Reset the last peak summation valley to:

peak summation value - valley summation value

Iteratively treat all peaks except the last:

There are two valleys on either side of a peak:

val1 = peak summation value - first valley summation value

val2 = peak summation value - second valley summation value

The least non-negative of val 1 and the val 2 is the best correction for a potential light gradient:

if val1 < val2

then

reset the peak summation value to val1

else

if val2 is non-negative

then

reset the peak summation value to val2

else

reset the peak summation value to zero

else val2 < val1:

if val2 is non-negative

then

reset the peak summation value to val2

else

if val1 is non-negative

then

reset the peak summation value to val1

else

reset the peak summation value to zero

Block 1B:    Select a Group of Corrected Peaks:

In what follows:

        group number is the index to groups

        group (group number) is the group whose index is group number

        number of peaks (group number) is the number of peaks in the

        set group (group number)

    Block 1B1:      Find all the groups in the region of interest for

        which:

            *       all of the peaks in the group are 0.75 to 1.25 of the

                    pitch from their nearest neighbouring peaks.


    if there are too many groups:

    then

            return Error:   TOO MANY GROUPS.

                            (probably the expected pitch  is incorrect.)

    else

        Block 1B2:   Choose one group from the groups

                    found.

        return errors found in Block 1B2.


Block 1B1:    Find all the Groups Whose Peaks are Pitch

                Distance Apart:

Group number = 0

Assign the first peak to group [0]


Iteratively examine all peaks in the region of interest except the

last:

At the ith iteration:

    gap = absolute value of:

            position of peak at ith position -

            position of peak at ith + 1 position

    if (gap < 1.25*pitch) and (gap > 0.75*pitch):

    then

            assign the peak at position i+1 to group [group number]

    else gap separates the ith+1 peak from the last group:

            increment group number by 1

```
if group number < maximum number of groups:
then
        assign the peak at position i+1 to group [group
        number]
else
        return Error:  TOO MANY GROUPS.
                       (probably the expected pitch is
                       incorrect.)
```

Block 1B2:  Choose One Group:

```
Iteratively examine groups:
(I.E. for all group number, 0 <= group number <=n, where n is the
number of groups)
        Select all groups for which:
                number of peaks [group number] >= expected number of
                leads.


if there exists more than one group for which:
        for all group numbers 0 to n:
        number of peaks [group number] >= expected number of leads.
then
        return Error:  The REGION of INTEREST is
                       MUCH LARGER THAN it NEED be.
else
        if there exist no groups for which:
                for all group number 0 to n:
                number of peaks [group number] >= expected number of
                leads.
        then
                return Error:  WRONG NUMBER of LEADS.
        else only one group selected:
                Remove all peaks from the region of interest which are not
                in the selected group.
```

Block 1C:  Iteratively Exclude Peaks From Either End
           of the Group:

In what follows:

group [i] is the ith peak in array of peaks which form the group.

group [0] is the first peak and group [n] is the last peak in the array of peaks.

pos(group[i]) is the position within the summation profile of group[i]

sum(pos(group[i])) is the corrected summation value at pos(group[i])

Measure average and standard deviation of corrected summation values at positions of peaks in the group

while (number of peaks in group > expected number
    of leads)
      and
(sum(pos(group[0])) or sum(pos(group[n]))
  are outside the normal range of values of
  the other peaks in group):
Set maximum difference = average + factor*standard deviation

Block 1C1:  Remove peaks which are outside the maximum difference.

if (number peaks in group > expected number
    of leads)
      and
(peaks have been removed from the group
  since the average and standard deviation
  have been measured last):
then
    Measure average and standard deviation of corrected
    summation values at positions of peaks in the group

```
        if (number peaks in group > expected number of leads)
            return Error:  WRONG NUMBER of LEADS


Block 1C1:  Remove Peaks:
    remove peaks at the beginning of the array group:
    while (absolute value(sum(pos(group[0])) -
            average) > maximum difference)
                and
        (number peaks in group > expected number of
        leads):
            Iteratively for all i, 1<=i<=n:
                group[i-1] = group[i]
            n = n-1


    remove peaks at the end of the array group:
    while (absolute value(sum(pos(group[n])) -
            average) > maximum difference)
                and
        (number peaks in group > expected number of
        leads):
            n = n-1


Block 2:  Find Average Centroid:
    The average centroid of this region of interest to sub-pixel
    accuracy is the average of the centres of all the leads in the
    region of interest.


    if distance between the middle lead position and the average
    centroid position is not within an acceptable range


    then
            return Error:  in the REGION of INTEREST
                            MEASUREMENTS:
                    Probably a missing or bent lead


    if the number of leads found is not equal to the number
```

```
of leads expected


then

        return Error:   WRONG NUMBER of LEADS:

                        Leads overlooked or leads missing or bent



Block 3:   Find Position and Orientation:
        Use the four average centroids found to:
            *    find the centre of the component
            *    find the horizontal and vertical angles
                 of orientation



        if the absolute value of:
            the difference between the horizontal and vertical angles > a
            maximum
        then
            return Error:   in ANGLE MEASUREMENTS:
                            One or more of the average centroid measurements
                            are in error probably due to inclusion of (a)
                            false leads(s).
```

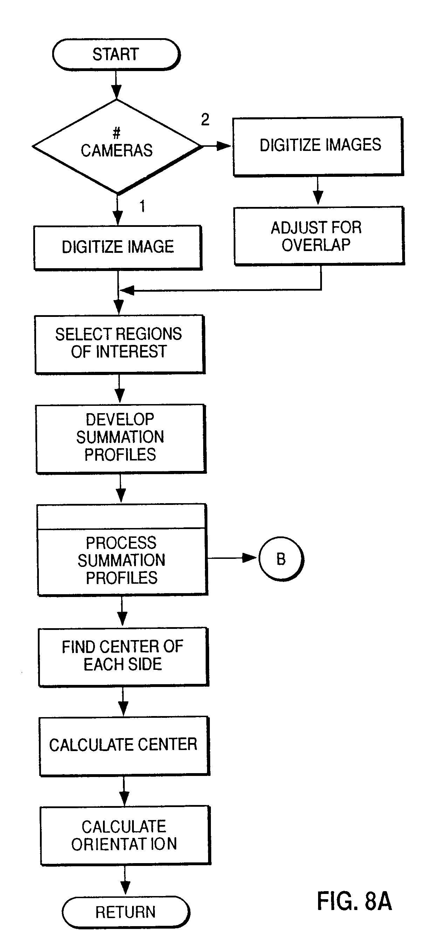

A modification of the system having a single camera (Fig. 7) is useful when less than the high resolution provided by the previously described system is required or when a single camera can provide the high resolution required.

In this embodiment, camera 10 snaps a picture of component 4 in frame grabber 22, reads into memory 24 the array of pixels detected by camera 10, such that pixel values are stored. Subarrays corresponding to the areas where leads are expected to appear are predefined as earlier described. Summation profiles are made as described with reference to Fig. 5. Corrections for light gradients are performed and noise peaks are excluded in the same manner as earlier described.

Further, while the use of a certain type camera has been described, it should be understood that any kind of image acquisition digitising apparatus is suitable for use with this invention.

The logic followed in vision processor 20 is shown in the flow chart of Fig. 8 which summarises the process as above described. In Fig. 8A, the encircled B is an example of Process Station Profiles given in Fig. 8 B.

While the present invention has been described having reference to a particular preferred embodiment and a modification thereto, those having skill in the art will appreciate that the above and other modifications and changes in form and detail may be made without departing from the scope of the invention as claimed.

A method of locating objects is described and claimed in EP -A-                    filed contemporaneously with this application and based upon US SN 07/634,642.


## Claims

1. A method of processing digitised gray level image array data, comprising the steps of selecting portions of an array corresponding to probable locations of interest, making a one dimensional summation array for each selected array portion by summing pixel values in each row of a column or summing pixel values in each column of a row, and performing all subsequent operations on the summation arrays.

2. A method of visually inspecting an electronic component with leads, comprising the steps of obtaining a two dimensional array of digitised pixel image data from a scene including the component, selecting a plurality of two dimensional subarrays of pixel data corresponding to expected locations of component leads, developing a one dimensional array summation profile representing each of the plurality of two dimensional subarrays, and performing subsequent vision processing operations using only the summation profiles.

3. A method for visually inspecting a component with leads, comprising the steps of capturing images of the component with a plurality of cameras, digitising images so captured, mapping portions of the digitised images corresponding to locations where leads are expected to a single coordinate system, and determining overlap between mapped image portions.

4. A method according to Claim 3, including the steps of finding lead centroid position in each mapped image portion, mapping lead positions from each image to a common coordinate system, identifying overlapping leads, and calculating component position and orientation as a function of lead centroids found.

5. A method according to Claim 4, wherein the finding step comprises developing one dimensional summation profiles corresponding to each mapped image portion, correlating profile peaks to individual lead centres, correcting profile peaks for light gradients, and excluding false peaks.

6. A method according to Claim 2 or 5, wherein the developing step comprises, summing gray level pixel values in rows or columns as a function of which is substantially parallel to expected lead axis.

7. A method according to Claim 1, 2 or 6, as appendant to Claim 2, wherein the performing step comprises identifying leads from station profiles through analysis including correlating profile peaks to centres of leads, correcting profile peaks for light gradients, and excluding false peaks.

8. A method according to Claim 5 or 7, wherein correcting peaks for light gradients includes subtracting valley values from adjacent peak values.

9. A method according to Claim 5, 7 or 8, wherein excluding false peaks includes ignoring corrected peaks below a predetermined value.

10. A method of inspecting a component with leads prior to placement on a circuitised substrate, comprising finding an average centroid of each side of the component, calculating component orientation, and determining exact component centre to sub pixel accuracy.

11. A method according to Claim 10, wherein the finding step comprises the steps of the method according to Claim 2, or any claim appendant to Claim 2.

12. Apparatus for inspecting electronic components with leads comprising means (10; 12) for acquiring a two dimensional array of image data, means (22) for operating on preselected subarrays of the array of image data to form a plurality of one dimensional summation profiles, and vision processing means (20) for operating on the summation profiles.

13. Apparatus according to Claim 12, wherein the vision processing means includes means for finding the centres of leads in a given summation profile and calculating an average centroid therefrom, means for calculating a component centre from the average centroids, and means for establishing component orientation using the average centroids.

14. Apparatus according to Claim 12 or 13, wherein the means for acquiring a two dimensional array of image data comprises at least one camera (10) and means (22) for digitising the camera image.

15. Apparatus according to Claim 14, wherein the means for acquiring a two dimensional array of image data comprises two cameras (10, 12) and means for combining images therefrom.

16. Apparatus according to Claim 15 wherein the means for combining images comprises means for mapping images from the two cameras to a common coordinate system, means for determining overlap between the images, and means for computing a centroid of a component.

14

FIG. 1

FIBER OPTIC
ILLUMINATION

ILLUMINATION

EP 0 493 105 A2

FIG. 2

FIG. 7

FIG. 3A

FIG. 3B

FIG. 4

FIG. 5

FIG. 6

START

#
CAMERAS

2 → DIGITIZE IMAGES

DIGITIZE IMAGES → ADJUST FOR OVERLAP

1

DIGITIZE IMAGE

SELECT REGIONS
OF INTEREST

DEVELOP
SUMMATION
PROFILES

PROCESS
SUMMATION
PROFILES → B

FIND CENTER OF
EACH SIDE

CALCULATE CENTER

CALCULATE
ORIENTATION

RETURN

FIG. 8A

B →

DETECT PEAKS
& VALLEYS

↓

CORRECT FOR
LIGHT GRADIENTS

↓

EXCLUDE
CORRECTED PEAKS

↓

#
CORRECTED
PEAKS < EXPECTED
# OF LEADS — YES → WRONG # OF LEADS

NO
↓

SELECT A GROUP OF
CORRECTED PEAKS

↓

ONE
GROUP
SELECTED
? — NO → RETURN ERRORS

YES
↓

ITERATIVELY
EXCLUDE PEAKS

↓

ERRORS
ENCOUNTERED
? — YES → RETURN ERRORS

NO
↓

PEAKS SELECTED
ARE LEAD CENTERS

FIG. 8B

20